# EUROPÄISCHE PATENTSCHRIFT

(11) **EP 1 055 548 B1**
(45) Veröffentlichungstag und Bekanntmachung des Hinweises auf die Patenterteilung: **23.02.2005**
(21) Anmeldenummer: 00110418.1
(22) Anmeldetag: 16.05.2000
(51) Int. Cl.: B60N 2/02

(54) **Elektrischer Sitzversteller**
Electrical seat adjuster
Dispositif électrique de réglage de siège

(30) Priorität: 27.05.1999 DE 19924234
(43) Veröffentlichungstag der Anmeldung: 29.11.2000
(73) Patentinhaber: ISE Innomotive Systems Europe GmbH, 51702 Bergneustadt (DE)
(72) Erfinder: Janisch, Mirko, 53721 Siegburg (DE)
(74) Vertreter: Fuchs Mehler Weiss & Fritzsche

(56) Entgegenhaltungen:
- WO-A-98/28163
- DE-A- 3 503 897
- US-A- 5 292 164
- PATENT ABSTRACTS OF JAPAN vol. 3, no. 1995, 28. April 1995 (1995-04-28) & JP 06 340810 A (TONEN CHEM CORP), 13. Dezember 1994 (1994-12-13)

## Beschreibung

Die Erfindung bezieht sich auf einen elektrischen Sitzversteller mit einer vertikalen Verstellung eines Kraftfahrzeugsitzes, der mindestens einen Elektromotor/Getriebeblock mit einer Gewindespindel aufweist, die im Wirkeingriff mit einer Antriebsmutter steht, die fest an einer Druckstange angebracht ist, welche über eine Hebelanordnung mit einem Vertikal-Verstellgestänge des Kraftfahrzeug-Sitzes verbunden ist.

Im Zuge der Entwicklung im Automobilbau, bestimmte Vorgänge bei der Bedienung des PKW's zu elektrifizieren, ist es auch bekannt geworden, die Verstellung von Kraftfahrzeugsitzen, sowohl hinsichtlich einer horizontalen Verstellung als auch hinsichtlich einer vertikalen Verstellung durch Knopfdruck elektrisch betätigbar durchzuführen, wobei die horizontale Verstellung sozusagen die typische Grundform ist, wogegen die vertikale Verstellung, weil aufwendiger, schon die komfortablere Version darstellt. Zu diesem Zweck sind Elektromotoren in Verbindung mit Winkelgetrieben, Gewindespindeln und Antriebsmuttern vorgesehen, wobei typischerweise bei der Horizontalverstellung die Antriebsmuttern ortsfest mit dem Fahrzeug verbunden sind und die Elektro-motoren mit Winkelgetriebe und Gewindespindel an dem zu bewegenden Fahrzeugsitz angebracht sind. Bei der vertikalen Verstellung ist die Antriebsmutter an einer Druckstange angebracht, die über eine Hebelanordnung mit einem Vertikalverstellgestänge des Kfz-Sitzes verbunden ist. Werden die Elektromotoren durch Knopfdruck mit der Bordspannung beaufschlagt, verdrehen sich die Gewindespindeln gegenüber der jeweiligen Antriebsmutter und verstellen damit den Sitz in die jeweilige Richtung.

Ein derartiger motorisch verstellbarer Sitz für Kraftfahrzeuge ist beispielsweise durch die DE 35 03 897 C2 und die DE 35 08 515 A1 bekannt geworden.

Diese Schriften zeigen einen horizontalen Sitzversteller mit metallischen Muttern. Durch die DE 39 19 378 C2 ist auch ein Horizontal-Sitzversteller bekannt geworden, der Antriebsmuttern aus Kunststoff, vorzugsweise aus POM, besitzt, die in einem metallischen Mutterkäfig aufgenommen sind.

Die Erfindung wendet sich an den vertikalen Antrieb eines elektrischen Sitzverstellers, d.h. an den Antrieb, der dazu dient, den Sitz in der Höhe zu verstellen. Je nach Aufwand sind ein oder mehrere solcher Vertikalantriebe vorgesehen. Eine wesentliche Komponente dieses vertikalen Antriebes ist die Antriebsmutter. Ihre generelle Aufgabe ist die Umwandlung der Drehbewegung der Getriebespindel in eine lineare Bewegung. Sie ist zu diesem Zweck fest an der Druckstange, mit der die verschiedenen Hebel des Vertikal-Verstellgestänges betätigbar sind, angebracht.

Über die Antriebsmutter der Vertikal-Verstellung müssen relativ hohe Kräfte übertragen werden, die ungleich größer als bei der Horizontal-Verstellung sind. Gemäß dem Stand der Technik wird daher diese Antriebsmutter seit Jahren durch eine Mutter aus Stahl gebildet, die an der Druckstange, die durch ein metallisches Blechteil gebildet wird, angeschweißt ist, obwohl bei der Horizontal-Verstellung Antriebsmuttern aus Kunststoff eingesetzt werden.

Die Fachwelt glaubte offenbar, daß Antriebsmuttern aus Kunststoff, wie sie aus der horizontalen Verstellung bekannt sind, bei der vertikalen Verstellung nicht die notwendige Festigkeit und Standzeit haben. So hätte auch der in der o.a. Druckschrift DE 39 19 378 C2 genannte Kunststoff "POM" nicht die notwendig Festigkeit und würde nicht die notwendige Standzeit des Sitzverstellers gewährleisten.

Die Verwendung einer Antriebsmutter aus Stahl hat verschiedene Nachteile, die jedoch bisher im Interesse der mechanischen Festigkeit in Kauf genommen wurden. Diese Nachteile sind:
- Das Verschweißen der Stahl-Antriebsmutter mit der Druckstange ist verhältnismäßig aufwendig und verursacht entsprechende Kosten, was sich insbesondere im Automobil-Zuliefergeschäft, wo es auf hohe Kostenminimierung ankommt, nachteilig bemerkbar gemacht.
- Die Stahl-Antriebsmutter ist relativ massiv und damit schwer, was sich nachteilig auf das Gewicht der Vertikal-Antriebsanordnung auswirkt.
- Das Laufverhalten der metallischen Antriebsmutter mit der metallischen Gewindespindel ist relativ geräuschbehaftet.
- Beim Auflaufen der Stahl-Antriebsmutter auf den typischerweise vorgesehenen Endanschlag in Form einer Stahl-Anschlagbuchse wird ein harter Schlag auf den Elektromotor/Getriebeblock ausgeübt, was zu einem unangenehmen Geräusch und einer Beschädigung der typischerweise aus Kunststoff bestehenden Zähne der Getriebezahnräder führen kann. Ferner kann ein Verklemmen der Stahlmutter mit der Stahl-Anschlagbuchse auftreten.
- Die Getriebespindel muß gefettet werden, was sich ebenfalls nachteilig auf die Kostensituation und auf die Wartungsfreundlichkeit auswirkt.

Ein Sitzversteller gemäß dem Oberbegriff von Anspruch 1 ist zum Beispiel aus der WO-A-98 28 163 bekannt.

Der Erfindung liegt die Aufgabe zugrunde, einen solchen elektrischen Sitzversteller mit einer vertikalen Verstellung eines Kraftfahrzeug-Sitzes, der mindestens einen Elektromotor/Getriebeblock mit einer Gewindespindel aufweist, die im Wirkeingriff mit einer Antriebsmutter aus hochfestem Kunststoff steht, die fest am antriebsseitigen Ende einer Druckstange mit U-förmigem Querschnitt angespritzt ist, welche über eine Hebelanordnung mit einem Vertikal-Verstellgestänge des Kraftfahrzeug-Sitzes verbunden ist, so auszubilden, daß Kosten und Gewicht reduziert werden können, eine dauerhafte Befestigung der Antriebsmutter an der Druckstange gewährleistet ist und ein ruhigerer Lauf beim Verstellen des Sitzes möglich ist.

Gemäß der Erfindung läßt sich auf einfache Weise eine hochfeste Antriebsanordnung erzielen, wenn die Druckstange einen U-förmigen Querschnitt und am antriebsseitigen Ende Verankerungs-Ausbildungen für eine feste Verankerung der Kunststoff-Antriebsmutter, die in die U-förmige Ausnehmung der Druckstange eingespritzt ist aufweist und die Verankerungsausbildungen laschenartige, in den U-förmigen Querschnitt eingefaltete Fortsätze der Schenkel der Druckstange oder Ausnehmungen darin sind.

Durch das Einspritzen der Kunststoff-Antriebsmutter direkt in die Druckstange und die Verankerung mit den laschenartigen Fortsätzen und Ausnehmungen an den Schenkeln der Druckstange läßt sich eine Kunststoff-Antriebsmutter herstellen, die die notwendigen hohen Verstellkräfte aufnehmen kann.

Durch diese erfindungsgemäßen Maßnahmen ergeben sich folgende Vorteile:
- Es entfällt der aufwendige Schweißvorgang beim Anbringen der Antriebsmutter an der Druckstange. Da der Spritzgießvorgang wesentlich kostengünstiger durchzuführen ist, tritt eine beachtliche Kostenreduzierung auf.
- Da der Kunststoff wesentlich leichter als der Stahl ist, ist auch eine deutliche Gewichtsreduzierung erzielbar, was sich vorteilhaft hinsichtlich des Beschleunigungsvermögens bei der Vertikalverstellung auswirkt.
- Es wird ein deutlich verbessertes Geräuschverhalten beim Verstellen des Sitzes erzielt.
- Es tritt eine Reduzierung des Schlages auf den Getriebemotor beim Auflaufen der Kunststoff-Antriebsmutter auf den metallischen Endanschlag ein.
- Das Fetten der Getriebespindel entfällt, was sich ebenfalls günstig auf die Kostensituation und auf die Wartungsfreundlichkeit auswirkt.

Zweckmäßig wird als hochfester Kunststoff gemäß einer Ausgestaltung der Erfindung der Kunststoff Zytel® (eingetragenes Markenzeichen) verwendet, vorzugsweise in einer glasfaserverstärkten Form, was ebenfalls zur Erhöhung der Festigkeit beiträgt. Der in der eingangs zitierten Schrift für einen Horizontal-Sitzversteller beschriebene Kunststoff POM ist dabei kein "hochfester Kunststoff" im Sinne der Erfindung. Selbst Kunststoff POM in der verstärkten Ausführung, z.B. mit 30 % Glasfaser-Anteil, erreicht im direkten Vergleich mit Zytel® (30 % Glasfasern) die Festigkeitswerte des Zytel® bei weitem nicht.

Die Reißfestigkeit und die Biegefestigkeit des Kunststoffes Zytel ist fast doppelt so hoch wie die des POM.

Auch bei den thermischen Werten ist der Zytel® dem POM weit überlegen. Die Wärmeformbeständigkeit des Zytel® ist um ca. 40 % höher und die Temperaturgrenze der Daueranwendung um 20 %.

Die Wärmebeständigkeit des Zytel® erlaubt es, daß die Antriebsmutter zusammen mit den metallischen Teilen ohne Bedenken durch die Lackierungsanlage (150° C) gehen kann, was einen großen Vorteil bei den Fertigungskosten und der Prozeßplanung ergibt.

Noch eine wichtige Stärke des Zytel® ist der kleine Ausdehnungskoeffizient, der sich stark bei niedrigen Temperaturen (ca. - 40°) bemerkbar macht. In der Gewindepaarung (Getriebespindel-Antriebsmutter) wird nämlich ein minimales Spiel angestrebt, was oft bei der Stahlmutter bei - 40° C zum schweren Lauf und sogar zur Verklemmung führt.
Der Zytel® dagegen zeigt gute Laufeigenschaften bei - 40° C, was bei der Anwendung von anderen Kunststoffen, unter anderem auch des POM, nicht der Fall ist.

Die Druckstange ist vorzugsweise ein verzinktes Stahlblech, die mit den üblichen Methoden der Blechverarbeitung herstellbar ist, und die auf einfache Weise beim Einspritzen der Kunststoff-Antriebsmutter mit in das Spritzgießwerkzeug einlegbar ist.

Weitere ausgestaltete Merkmale sowie Vorteile der Erfindung ergeben sich aus der Beschreibung eines in der Zeichnung dargestellten Ausführungsbeispieles.

Es zeigen:
- Fig. 1: einen verstellbaren Träger für einen Kraftfahrzeugsitz mit den zugehörigen Antrieben in der Draufsicht, der mit der erfindungsgemäß ausgebildeten Druckstange bei den Vertikalantrieben ausgestattet ist,
- Fig. 2: eine Druckstange für den vertikalen Antrieb bei dem elektrischen Sitzversteller nach Fig. 1, jedoch ohne Antriebs-Mutter, und zwar im Figurenteil A in Form einer Draufsicht, im Figurenteil B in Form einer (seitenverkehrten) Seitenansicht, und im Figurenteil C im Querschnitt, und
- Fig. 3: die Druckstange nach Fig. 2, jedoch mit erfindungsgemäß eingespritzter Kunststoff-Antriebsmutter.

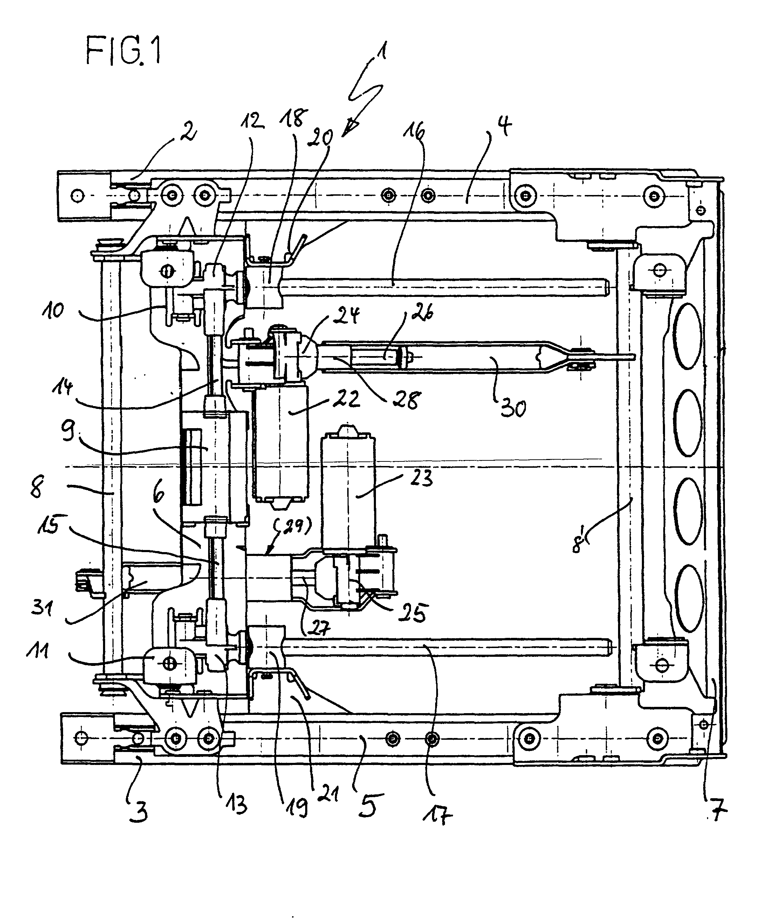

Bei dem in Fig. 1 gezeigten verstellbaren Träger 1 für einen Kraftfahrzeugsitz sind in zwei parallelen, am Fahrzeug befestigten Unterschienen 2, 3 zwei Oberschienen 4, 5 längsbeweglich geführt. Die beiden Oberschienen 4, 5 sind durch eine vordere Traverse 6 und eine hintere Traverse 7 miteinander verbunden. Auf der vorderen Traverse 6 ist in einem mittleren Bereich ein Antriebsmotor 9 gehaltert. Auf beiden Seiten des Motors 9 ist jeweils ein Lagerbock 10 bzw. 11 angeordnet, der jeweils ein Winkelgetriebe 12, 13 trägt. Die Winkelgetriebe 12, 13 werden vom Antriebsmotor 9 über Antriebswellen 14, 15 angetrieben. Sie treiben ihrerseits Verstellspindeln 16, 17 an, auf denen Verstellmuttern 18, 19 gelagert sind. Die Verstellmuttern sind über Mutterhalter 20, 21 mit den Unterschienen 2, 3 und damit ortsfest mit dem Fahrzeug verbunden.

Die bislang beschriebenen Antriebselemente sind an sich bekannt und dienen in konventioneller Weise der horizontalen Verstellung des Fahrzeugsitzes.

Für eine vertikale Verstellung des Fahrzeugsitzes sind entsprechende Antriebsanordnungen vorgesehen, im Beispiel nach Fig. 1 zwei Anordnungen. Sie bestehen jeweils aus einem an der vorderen Traverse 6 befestigten Elektromotor 22, 23, dem jeweils ein Winkelgetriebe 24, 25 mit Verstellspindeln 26, 27 zugeordnet ist.

Diese Verstellspindeln stehen jeweils im Wirkeingriff mit einer Antriebsmutter 28, 29 (die Antriebsmutter 29 ist bei der Darstellung nach Fig. 1 verdeckt), die jeweils an einer Druckstange 30, 31 befestigt sind. Die Druckstangen 30, 31 wiederum stehen in nicht näher dargestellter Weise über Hebel mit einem Vertikal-Verstellgestänge 8, 8' des Kraftfahrzeugsitzes in Verbindung.

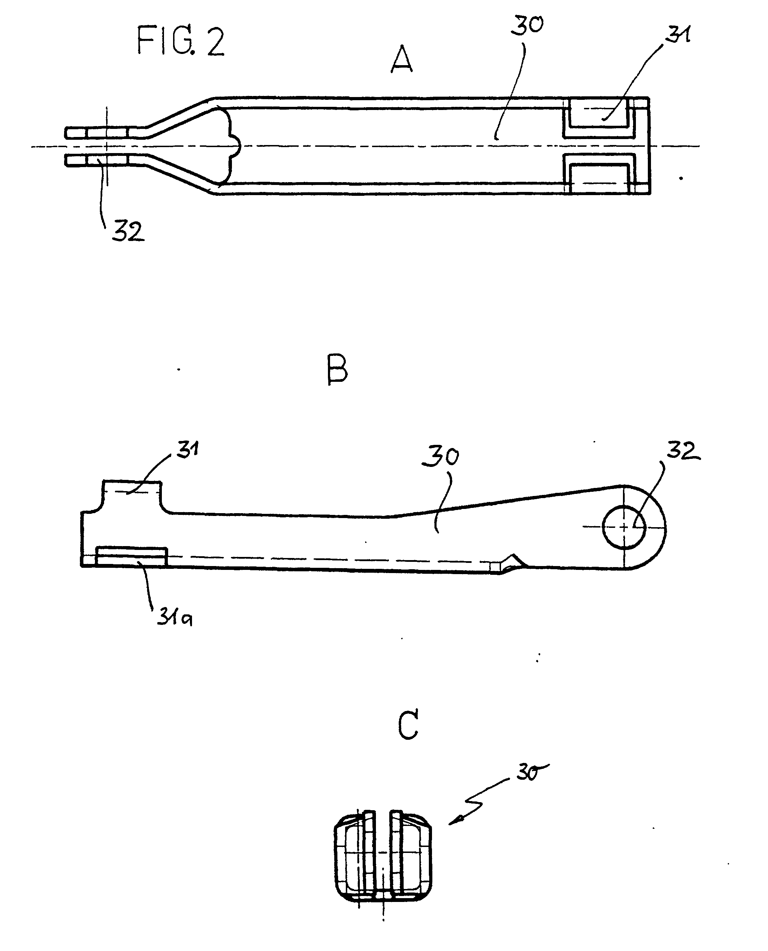

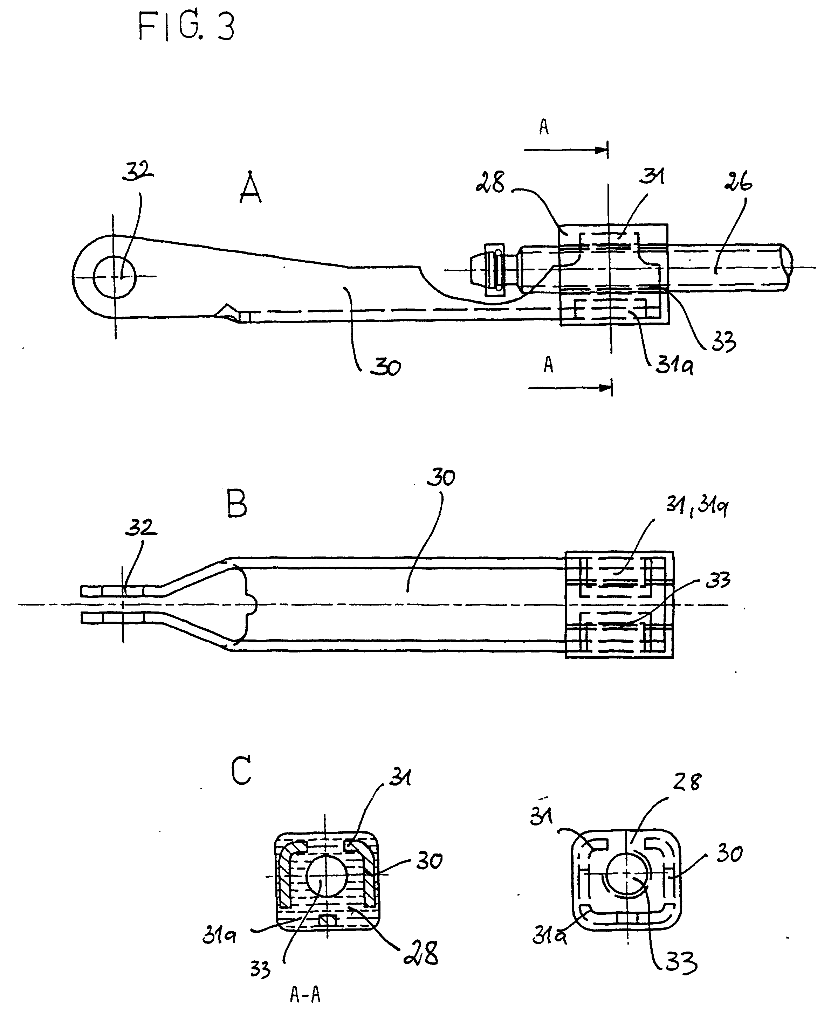

Die Ausbildung der Antriebsmuttern 28, 29 und ihre Befestigung an den Druckstangen 30, 31 ist Gegenstand der Erfindung und wird in den Figuren 2 und 3 näher erläutert.

Die Fig. 2 zeigt eine der beiden Druckstangen 30, die aus einem verzinkten Stahlblechteil besteht, das mit den üblichen Methoden der Blechverarbeitung hergestellt ist. Diese Druckstange 30 besitzt aus Festigkeitsgründen (Kastenprinzip) einen U-förmigen Querschnitt. Am rechten, d.h. antriebsseitigen Ende wird, wie noch anhand der Fig. 3 näher zu erläutern sein wird, die Antriebsmutter 28 in Form einer Kunststoff-Antriebsmutter angebracht. Zur Verankerung mit der Kunststoff-Antriebsmutter besitzt das antriebseitige Ende der Druckstange 30 laschenartige, in den U-förmigen Querschnitt eingefaltete obere Fortsätze 31 und untere Ausnehmungen 31 a der Schenkel der Druckstange. Am gegenüberliegenden Ende der Druckstange besitzt diese eine Öffnung 32 für die Befestigung mit einem Hebelsystem, das auf das Vertikal-Verstellgestänge 8, 8' des Kraftfahrzeugsitzes einwirkt.

Am antriebsseitigen Ende der Druckstange 30 ist, wie aus Fig. 3 zu ersehen ist, die Kunststoff-Antriebsmutter 28 direkt in die U-förmige Ausnehmung der Druckstange eingespritzt, so daß beide Elemente eine Einheit bilden. Sie besitzt einen nahezu quadratischen Querschnitt (Fig. 3C) und ist durch die Fortsätze 31 bzw. die Durchbrechungen 31 a fest an der Druckstange 30 verankert.

Für den betrieblichen Wirkeingriff mit der Gewindespindel besitzt die Kunststoff-Antriebsmutter 28 eine Gewindebohrung 33.

Die Kunststoff-Antriebsmutter 28 wird aus einem hochfesten Kunststoff hergestellt. Ein solcher Kunststoff ist beispielsweise Zytel®. Durch Beimischung von Glasfasern kann die Festigkeit noch gesteigert werden.

Die Druckstange 30 mit Kunststoff-Antriebsmutter 28 nach Fig. 3 ist vorzugsweise ein Spritzgießteil. Die metallische Druckstange wird dazu in ein Spritzgießwerkzeug eingelegt und in gewünschter Weise mit Kunststoff unter Formung der Antriebsmutter umspritzt.

Durch die erfindungsgemäße Ausbildung der Druckstange 30 mit einer Kunststoff-Antriebsmutter 28 aus hochfestem Kunststoff können die bei der Umwandlung der Drehbewegung der Getriebespindel in die lineare Bewegung der Druckstange entstehenden hohen Kräfte übertragen werden, ohne daß die Kunststoff-Antriebsmutter in ihrem Gefüge darunter leidet.

## Patentansprüche

1. Elektrischer Sitzversteller mit einer vertikalen Verstellung eines Kraftfahrzeug-Sitzes, der mindestens einen Elektromotor/Getriebeblock mit einer Gewindespindel aufweist, die im Wirkeinariff mit einer Antriebsmutter (28, 29) aus hochfestem Kunststoff steht, die fest am antriebsseitigen Ende einer Druckstange (30) mit U-förmigem Querschnitt angespritzt ist, welche über eine Hebelanordnung mit einem Vertikal-Verstellgestänge des Kraftfahrzeug-Sitzes verbunden ist, **dadurch gekennzeichnet, daß** die Druckstange (30) so ausgebildet ist, daß sie in der Schnitt-Ebene quer zu ihrer axialen Erstreckung den U-förmigen Querschnitt und am antriebsseitigen, offenen Ende Verankerungs-Ausbildungen (31, 31 a) für eine feste Verankerung der Kunststoff-Antriebsmutter (28, 29), die vollständig in die U-förmige Ausnehmung der Druckstange (30) eingespritzt ist, aufweist, wobei die Verankerungs-Ausbildungen (31, 31 a) laschenartige, in den U-förmigen Querschnitt eingefaltete Fortsätze (31) der beidseitigen Schenkel der Druckstange (30, 31) sowie Ausnehmungen (31 a) in der Druckstange sind.

2. Elektrischer Sitzversteller nach Anspruch 1, **dadurch gekennzeichnet, daß** die Kunststoff-Antriebsmutter (28,29) aus dem hochfesten Kunststoff Zytel® besteht.

3. Elektrischer Sitzversteller nach Anspruch 1 oder 2, **dadurch gekennzeichnet, daß** der hochfeste Kunststoff ein glasfaserverstärkter Kunststoff ist.

4. Elektrischer Sitzversteller nach einem der Ansprüche 1 bis 3, **dadurch gekennzeichnet, daß** die Druckstange (30, 31 ) durch ein verzinktes Stahlblech gebildet ist.

## Claims

1. Electrical seat adjuster with vertical adjustment of a motor vehicle seat, which adjuster has at least one electric motor/gearing block having a threaded spindle that is in operative engagement with a drive nut (28, 29) consisting of high-strength plastics material which is fixedly injection-moulded onto the drive end of a thrust rod (30) of U-shaped cross-section which is connected *via* a lever arrangement to a system of vertical adjusting rods of the vehicle seat, **characterised in that** the thrust rod (30) is so constructed that it has the U-shaped cross-section in the plane of section transverse to its axial extent and has anchoring arrangements (31, 31a) at the open, drive end, which anchoring arrangements (31, 31a) are provided for firmly anchoring the plastics drive nut (28, 29) which is completely injection-moulded into the U-shaped recess in the thrust rod (30), the anchoring arrangements (31, 31a) being tab-like continuations (31) of the bilateral limbs of the thrust rod (30, 31), which tabs (31) are folded into the U-shaped cross-section, and apertures (31a) in the thrust rod.

2. Electrical seat adjuster according to claim 1, **characterised in that** the plastics drive nut (28, 29) consists of the high-strength plastics material Zytel®.

3. Electrical seat adjuster according to claim 1 or 2, **characterised in that** the high-strength plastics material is a glass-fibre-reinforced plastics material.

4. Electrical seat adjuster according to any one of claims 1 to 3, **characterised in that** the thrust rod (30, 31) is formed by a zinc-plated sheet steel.

## Revendications

1. Dispositif électrique de réglage de siège comprenant un réglage vertical d'un siège de véhicule automobile, qui présente au moins un bloc de transmission/moteur électrique avec une broche filetée qui est en prise fonctionnelle avec un écrou d'entraînement en plastique haute résistance (28, 29) qui est fixé par injection à l'extrémité du côté de l'entraînement d'une tige de pression (30) ayant une section transversale en forme de U, qui est reliée par le biais d'un agencement de levier à une tringlerie de réglage verticale du siège du véhicule automobile, **caractérisé en ce que** la tige de pression (30) est réalisée de telle sorte qu'elle présente, dans le plan de coupe transversalement à son étendue axiale, la section transversale en forme de U et à l'extrémité ouverte du côté de l'entraînement, des formations d'ancrage (31, 31a) pour un ancrage fixe de l'écrou d'entraînement en plastique (28, 29), qui est fixé par injection complètement dans l'évidement en forme de U de la tige de pression (30), les formations d'ancrage (31, 31a) étant des saillies (31) de type pattes, pliées dans la section transversale en forme de U des branches bilatérales de la tige de pression (30, 31) ainsi que des évidements (31a) dans la tige de pression.

2. Dispositif électrique de réglage de siège selon la revendication 1, **caractérisé en ce que** l'écrou d'entraînement en plastique (28,29) se compose de plastique Zytel® haute résistance.

3. Dispositif électrique de réglage de siège selon la revendication 1 ou 2, **caractérisé en ce que** le plastique haute résistance est un plastique renforcé par des fibres de verre.

4. Dispositif électrique de réglage de siège selon l'une quelconque des revendications 1 à 3, **caractérisé en ce que** la tige de pression (30, 31) est formée par une tôle d'acier galvanisée.
